# EUROPEAN PATENT SPECIFICATION

(11) **EP 2 094 944 B1**
(45) Date of publication and mention of the grant of the patent: **20.01.2010**
(21) Application number: 07860927.8
(22) Date of filing: 21.12.2007
(51) Int. Cl.: E21D 21/00

(54) **A DEFORMABLE ROCK BOLT**
VERFORMBARER FELSANKER
BOULON D'ANCRAGE DÉFORMABLE

(30) Priority: 22.12.2006 SE 0602799
(43) Date of publication of application: 02.09.2009
(73) Proprietor: Dynamic Rock Support AS, 7041 Trondheim (NO)
(72) Inventor: LI, Charlie Chunlin, N-7049 Trondheim (NO)
(74) Representative: Fluge, Per Roald
(86) International application number: PCT/NO2007/000461
(87) International publication number: WO 2008/079021

(56) References cited:
- WO-A-99/61749
- DE-C1- 3 504 543
- DE-C1- 10 131 818
- US-A- 4 784 530
- US-A- 5 259 703
- US-A- 5 511 909
- US-A1- 2005 158 127

## Description

### Introduction

This invention relates to bolting for reinforcement of rocks subject to slow deformation or sudden bursting. Bolting is the most commonly used measure for rock reinforcement in underground excavations. Millions of rock bolts are consumed in the world every year. Basic demands to rock bolts are that they have to be able to bear not only a heavy load, but also withstand a certain elongation before failure of the bolt. In highly-stressed rock masses, the rock reacts to excavation either in form of large deformation in weak rocks, or of rock bursting in hard rocks. In these situations, deformation-tolerable (or energy-absorbable) bolts are required in order to achieve a good effect of rock reinforcement. Particularly in the mining industry, this need for deformation-tolerable bolts is even stronger than in other rock branches since mining activities are getting deeper and deeper and problems of rock deformation and rock burst become increasingly severe.

### Background art

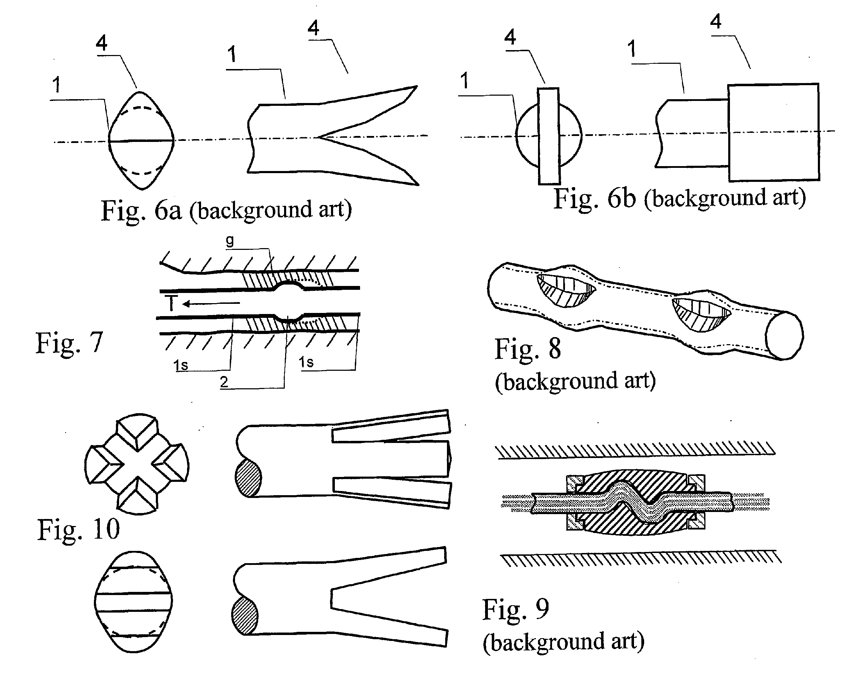

WO99/61749 Ferguson *:* "Rock bolt and method of forming a rock bolt" describes indentations forming paddle sections formed by plastically deforming a portion of a steel bar, the deformation made through application of an eccentric shear force on the bar, resulting in paddles such as redrawn in Figure 8 of the present application. The purposes of Ferguson's rock bolt is for the paddle to enhance mixing, and for the shear formation of the paddle not to plastically deform the bolt axially nor sidewardly of the bolt. Ferguson proposes an expandable shell mounted including radially acting wedges for interacting with the paddles to expand the shells to lock the bolt against the wall of the bolt hole. Ferguson further proposes a plurality of paddle sections formed along the extent of the bolt. A significant disadvantage of the paddles of Ferguson is that the fabricating method involving deforming a portion of the bolt by application of an eccentric shear force, makes the paddle section to constitute the weakest point so that it could not provide a satisfactory anchoring effect.

US-patent application 2005/0158127A1 also to Ferguson*,* "Yielding strata bolt", describes a rock bolt having a tendon which may yield by slipping through the anchors rather than by yield of the tendon material, and thereby control movement of unstable rocks into which the bolt is arranged. The tendon as such may be constituted by strands of wire or a metal bar, and has a surrounding tube arranged as a grout slippage mechanism. The grout anchors are constituted by two symmetrical anchor parts clamped to the tendon, please see Fig. 9 of the present application. A disadvantage of US2005/0158127 is the fact that the tension element is only deformed and not strengthened compared to the straight portion of same, and thus the bolt is susceptible to break at the anchor, particularly if the tension element is made of a solid bar. Another disadvantage of US2005/0158127 is the mere number of components required for forming a functioning rock bolt.

German patent DE 35 04 543 defines an anchor rod for being inserted and grouted or glued into boreholes in subsurface cavities. The anchor has an anchor rod with sections having a profiled surface for connection with the rock and a single-ended threaded portion with a nut integral with or welded to the rod itself. The anchor rod has a fixed, integral or welded anchor plate separating between the external threaded portion and the borehole-internal partially profiled portion of the anchor rod and may thus not be used for pre-tensioning the anchor rod in the borehole. A surface profiling of the anchor rod is formed through a wave formation in the longitudinal direction of an originally smooth rod with a round cross-section. The rod of DE 35 04 543 has three consecutive sections for sitting in a borehole: a smooth, projection-free middle portion of the anchor rod with a transition to a wavy portion of the rod in either ends of the smooth middle section, the transition having an increasing wave amplitude in the direction away from the smooth middle section. The smooth portion is for taking up longitudinal forces arising after rock deformation has occurred, but may not prevent initial rock deformation due to the fact that the rock bolt may not be pretensioned in the borehole.

### Problems to be solved

In accordance to the anchoring mechanism all bolting devices are classified in three categories: (a) mechanical bolts, (b) fully grouted bolts and (c) frictional bolts.
(a): Conventional mechanical bolts are two-point anchored in open holes. They are not reliable in case of large rock deformation.
(b): Fully grouted bolts mainly refer to rebar bolts grouted in holes with either cement or epoxy resin. A rebar bolt is made of a steel bar with ribs on its cylindrical surface. This type of bolt is stiff and tolerates only small deformations prior to failure. It has often been observed that rebar bolts fail in highly stressed rock masses (Li, 2006a).
(c): Frictional bolts can bear a large deformation, but their load-bearing capacity may be quite low. For instance, a standard Split Set bolt may only bear a load of about 50 kN (Stillborg, 1994).

Among all the alternatives of the presently available commercial rock bolts, the bolt best suitable for combating problems of rock deformation and rock burst may be the so-called South African cone bolt (Li and Marklund, 2004). The cone bolt can elongate largely and at the same time it bears a quite high load. However, it is a two-point-anchored bolt with an inverted cone at the inner end of an otherwise slick bolt for being installed in a cement-filled hole. The surface anchor may be a plate held by a nut on the threaded outer end of the bolt. A failure of one of the anchors, for instance at the wall surface, would lead to a complete loss of its function of rock reinforcement.

Concerning rock reinforcement in highly stressed rock masses, the drawbacks of the currently available bolts are:
- Rebar bolts are too stiff and tolerate a very limited elongation (about 10 mm) prior to failure.
- Frictional bolts provide a too low load-bearing capacity.
- Cone bolts are not sufficiently reliable because of their two-point anchoring mechanism.

### Loading patterns of bolts in different rock masses

In weak rocks, a large volume of rock around an underground opening will be subjected to failure in the case of high in-situ stresses. The magnitude of rock deformation is largest at the wall surface of the opening and decreases towards the inside of the rock mass. This type of rock deformation results in that the rock bolts are most severely loaded in the area close to the wall surface (Sun, 1984; Li and Stillborg, 1999). That explains why many rebar bolts fail at the thread in largely deformed rock masses (Li, 2006a). Sometimes, even a large shear fracture may be developed several metres back of the wall surface (Li, 2006b). In this case, it is demanded that the bolts should possess also capability of bearing load and deformation in deep locations.

In a jointed rock mass, a,bolt is locally loaded at locations where the bolt intersects rock joints which are being opened (Björnfot and Stephansson, 1984). There may exist several load peaks along the length of a bolt and the most loaded bolt section may be situated deeply inside the rock. In this type of rock mass, it is demanded that the bolt has a good load bearing capacity and also a high deformation bearing capacity along its entire length.

### Desired characteristics for an ideal bolt

An ideal bolt for largely deformed rock mass should be able to bear a large load as well as being able to take a long elongation. Furthermore, the anchoring mechanism of the bolt should be reliable.

### Short summary of the invention

The above problems may be solved by the present invention which is a rock bolt for being grouted in a borehole in a rock, said rock bolt characterised by
- an elongate cylindrical massive stem with a threaded portion at the borehole surface portion of said stem, said threaded portion provided with one or more nuts and one or more washers, sheaves or face plates arranged for pre-tensioning the rock bolt in the borehole;
- said stem comprising three or more extensive lengths of stem portions, each stem portion followed by an integrated anchor, said anchors being of short extent compared to the extent of said stem portions, said anchors distributed with separations along the length of said stem;
- said anchors for being locally anchored relative to their corresponding local borehole wall portions for taking up load arising due to rock deformation,
- said stem portions arranged for slipping relative to the grout or the borehole, so as for each of said stems to constraining local rock deformation through elongation of said stem portions between pairs of a locally anchored preceding anchor and a locally anchored consecutive anchor.

### Advantages of the invention

The present invention has certain advantages over WO99/61749 in that the anchors of the present invention constitute not the weakest but the strongest elements of the rock bolt so that they are not susceptible of deforming or breaking under load, and may thus provide a satisfactory anchoring effect.

The present invention also provides advantages over US-patent application 2005/0158127A1 in the fact that the tension element is reworked to form strengthened anchors compared to the straight portions of the rock bolt stem, and thus the bolt is susceptible to yield along the stem portions and not at the anchors. Another advantage over US2005/0158127 is the significant reduction of components (at least 6 components) required for forming a functioning rock bolt, in the simplest embodiment formed by an elongate steel stem with integrated anchors formed from the same blank.

### Descriptions of the drawings

The invention has been illustrated in the attached drawings, which are intended to illustrate the invention and which shall not be construed to limit the invention, which shall only be limited by the attached claims only.
Figure 1 is a side elevation view of a rock bolt according to the invention, here illustrated in a basic embodiment comprising only a stem with evenly distributed integrated anchor portions for being anchored to the cement or resin when hardened in a borehole.
Figure 2 is a side elevation view of a rock bolt according to the invention, here illustrated arranged in a section of a borehole with the integrated anchor portions anchored by grout hardened to cement or alternatively resin. For simplicity only the grout adjacent to the anchors is illustrated. A stem portion is illustrated spanning a crack that has opened between two blocks of the rock, and the stem portion has been extended while the adjacent anchors remain fixed relative to their local borehole perimeters.
Figure 3 is a side elevation view of a rock bolt according to an embodiment of the invention, here illustrated with a threaded portion with a washer and/or a face plate and a nut at the left side of the drawing, and further illustrated with an optional end mixer at the right side of the drawing.
Figure 4 is a side elevation view of a rock bolt according to an embodiment of the invention, here arranged grouted between the bottom of the hole and a washer at the surface of the rock. Only the portions of the grout about the anchors are illustrated for simplicity, and the entire annulus about the bolt would normally grout-filled.

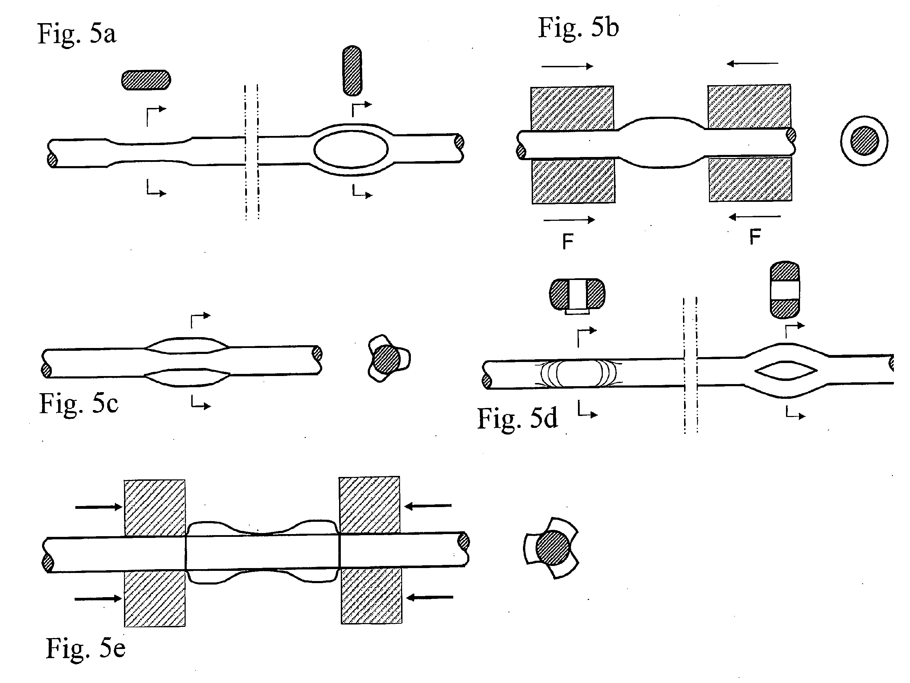

Figure 5a, b, c, d, and e illustrate different embodiments of the anchors according to the invention. Fig. 5a illustrates an embodiment of the anchor in which a short portion of the stem has been flattened to provide a widened, integrated anchor. The flattening may take place under slight longitudinal simultaneous upsetting so as for providing a yield strength of said anchors higher than the yield strength of the adjacent stem portions. Fig. 5b illustrates another embodiment of the anchor in which a short portion of the stem has been shortened by longitudinal upsetting. Fig. 5c is an illustration of a three-lobed anchor that shows a certain tapering-off in the transition zone toward either end. Fig. 5d illustrates a rock bolt according to the invention having anchors with an eye-shaped aperture. Fig. 5e illustrates an embodiment of an anchor shaped by upsetting similar to the upsetting of Fig. 5b.
Figure 6 shows two alternative forms of background art end mixers which may optionally be arranged at the bottomhole end of the rock bolt of the invention. Fig. 6a shows an Y-split end mixer and Fig. 6b shows an end mixer plate welded to the bottomhole end of the bar.
Figure 7 illustrates that whereas the main portion of deformation shall be absorbed in elongating the stem portion between the anchors, a proportion of the deformation may also be taken up as a relatively short longitudinal slide movement of an anchor in the hardened grout.
Figure 8 is an isometric view redrawn from WO99/61749 Ferguson showing indentations forming paddle sections formed by deforming a portion of a steel bar, the deformation made through application of a mechanical eccentric shear force on the bar.
Figure 9 is a longitudinal section view redrawn from US2005/0158127, also to Ferguson*,* showing a tensioning element or tensioning wires in a pipe deformed by a.two-part clamping anchor.
Fig. 10 shows two embodiments of end mixers.

### Description of embodiments of the invention.

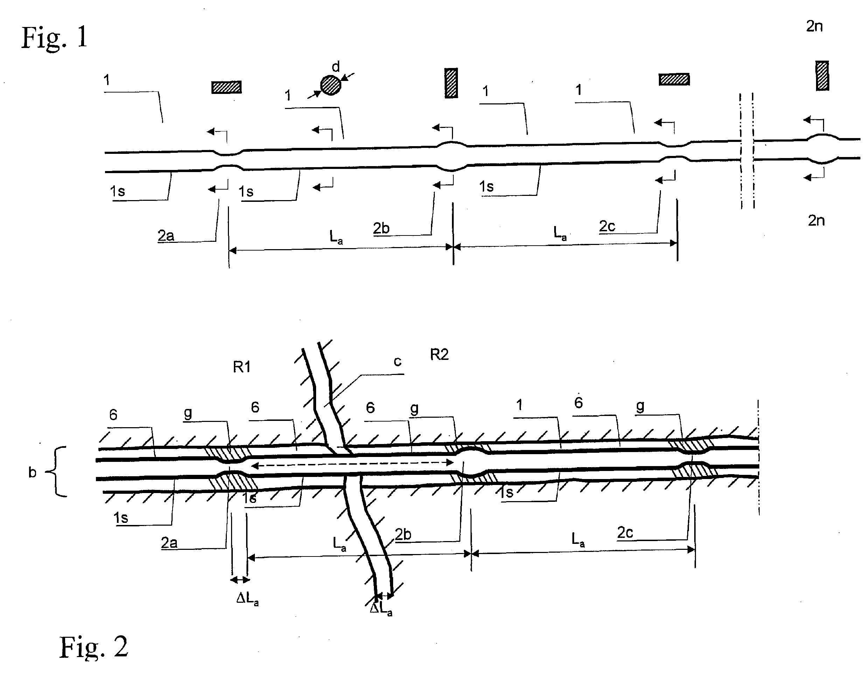

The rock bolt according to the invention approaches a bolt providing the required qualities of an ideal bolt mentioned above. It is given a name of a deformable bolt, abbreviated to "D-bolt". The deformable bolt according to the invention is a multi-point anchored bolt arranged for being grouted with either cement or epoxy resin in a borehole. Figure 1 shows the side elevation view of the bolt according to a basic embodiment of the invention, comprising a preferably smooth steel rod stem (1) with three or more integrated anchors (2a, 2b, 2c, ..., 2n) distributed along the length of the rod stem. Stated in other terms, the invention comprises a rock bolt for being grouted by grout (g) in a borehole (b), the rock bolt comprising an elongate cylindrical massive stem (1) comprising extensive lengths of stem portions (1s) separated by integrated anchors (2) distributed with separations (Lₐ) along the length of said stem (1). The anchors (2a) are arranged for being locally anchored relative to their local borehole wall portions for taking up load arising due to rock deformation. The stem portions (1s) are arranged for slipping relative to the grout or the borehole, so as for each of said stems (1s) to take up local elongation strain between pairs of a locally anchored preceding anchor (2) and a locally anchored consecutive anchor (2).

The rock bolt of the invention comprising the stem (1) with integrated anchors (2) is advantageously all made in steel. Other metals that are both strong and deformable may be used.

According to a first application of the rock bolt according to the invention, the stem portions (1s) are adapted for taking up local elongation strain due to long-term rock deformation that may take place during days, months, or years after excavation such as would occur in weak, soft rocks.

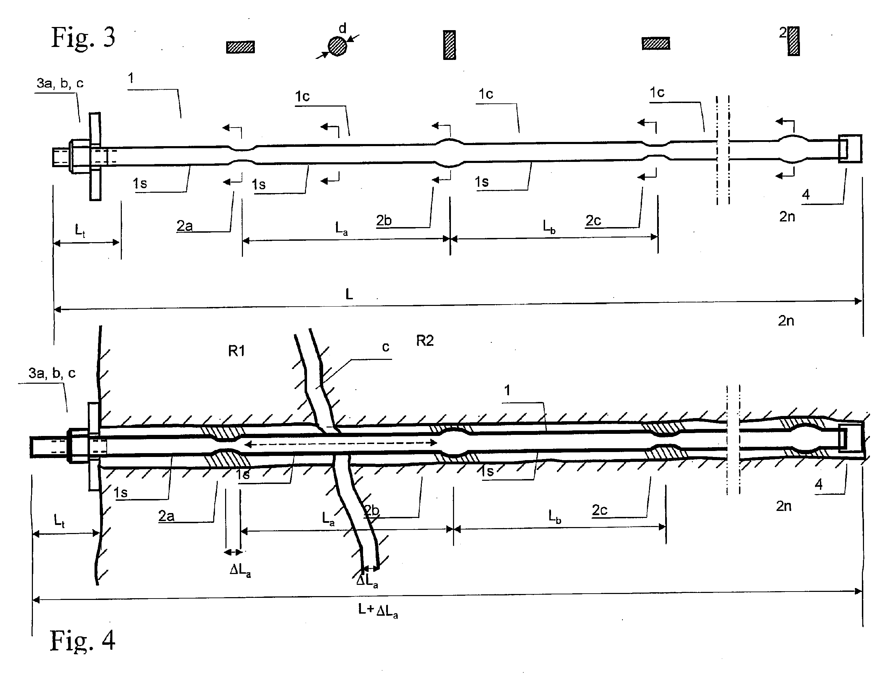

According to a second application of the rock bolt according to the invention, the stem portions (1s) may take up short-term dynamic loads such as dynamic loads due to rock bursts or explosions. This is due to the fact that a local elongation of the rock bolt due to a suddenly bursting crack indicated by "c" in Figs. 2 and 4, which opens to separate disjoint crack surfaces by several centimetres may be distributed over about 50 centimetres of steel if using a rock bolt according to the invention. The stem portions between the anchors will only slide relative to the hardened grout or the borehole perimeter. This effect may not be achieved using a rebar rock bolt of which every portion is ribbed and thus locally stuck almost over every stem section in the grout, and which may be forced to take up a local shock elongation (ΔLₐ) over only a few centimetres, and thus break, which is often experienced in the background art. In this way, also dynamic loads similar to rock bursts, such as explosions, may be taken up without the rock bolt breaking.

In an embodiment of the invention, the bolt shall comprise a threaded portion (3a) arranged in the head end and provided by a nut (3b) for holding a washer (3c) or plate against a rock surface. According to an embodiment, the opposite end for constituting the inner end of the rock bolt with regard to the borehole may be provided with an end mixer (4) which will be useful when inserting the rock bolt into epoxy resin.

The spacing between two adjacent anchors is here denominated Lₐ and may be even. The length of a bolt is thus in an embodiment approximately L = n Lₐ, where n is the number of the rod segments between anchors (or the number of the anchors). A non-even distribution of anchors along a portion of the stem may also be used.

Advantageously, in the rock bolt of the invention the stem portions (1s) are arranged for having a higher deformation capacity per unit length as compared to the anchors (2). Further, in the rock bolt of the invention, the integrated anchors (2) may advantageously be hardened so as to prevent being deformed while being loaded while fixed in the hardened grout, and to prevent being ground down if sliding in the hardened grout. Stated otherwise, the ultimate strength of the anchors (2) should be higher than the yield strength of the stem constituted by the stem portions (1, 1 s).

The stem portions (1 s) are arranged for slipping relative to the hardened grout or the borehole, so as for each of said stems (1 s) to take up local elongation strain between pairs of a locally anchored preceding anchor (2) and a locally anchored consecutive anchor (2). The rod stem (1) of the bolt has, according to an embodiment of the invention, a smooth, preferably cylindrical surface. The stem portions may be more or less finely ground or polished by techniques like chemical polishing or electropolishing. The surface may further be treated in such a way that the surface of the rod has no or negligibly low bonding to the hardened grout. One means to achieve this goal is to coat the rod surface with a thin layer of wax, lacquer, paint or other non-adhesive or lubricant medium. When subjected to tensile loading, rod segments between two adjacent anchors would more or less freely elongate without coupling to the hardened grout around.

When elongating under strain, the stem (1) may slip relative to its local borehole perimeter by having a surface released relative to said hardened grout due to diameter reduction due to the so-called Poisson effect.

The rock bolt according to the invention may have the stem portions (1 s) being surface treated so as for not binding to said hardened grout. This may be achieved through chemical surface treatment such as by being added a metal oxide layer on the stem (1).

At the anchoring points the bolt is coupled to the rock mass. A basic demand to the anchors is that they are stronger than the rod. It implies that the rod gets into yielding before the anchors fail. The anchors can have different shapes. The shape of the anchor shown in Figure 1 shows just one of several useful shapes of anchors. With the embodiment shown, the anchor is formed simply by flattening the rod in one diameter-direction and enlarging the dimension in the orthogonal direction. The neighbour anchors may have the same flattened shape made orthogonally to the flattening direction of the present anchor. Advantageously, given that the borehole is more or less straight and having an even wall, the evenly spaced anchors may make the steel rod avoid direct contact with the wall of the borehole, which may help the bolt being entirely enveloped by the grout. This may provide an improved corrosion protection of the bolt stem as compared to conventional bolts having only a bottom anchor and a surface anchor.

It is known in the background art that for resin grouting, a mixing mechanism, called end mixer, may be added to the bottom end of the bolt, please see Fig. 6. One alternative for the end mixer is to split the rod end into a shape of "Y", please refer to Fig. 6a. Other alternatives, such as a blade welded to the end, please see Fig. 6b, are also possible for the end mixer. Fig. 10 shows two embodiments of end mixers useful for use in boreholes with epoxy resin.

A rock bolt according to the invention may reinforce the rock in a way as explained below: Rock deformation will primarily load the bolt according to the invention via the anchors. The rod, i.e. the bolt stem portions between two adjacent anchors, in turn, will be stretched and elongated. Under extremely high loads, the rod will get into yielding. In some cases, for instance a relatively weak grout, the anchors could even slide a bit within the grout without a significant loss of reinforcement. Because of these two mechanisms, the bolt can tolerate a large elongation, while at the same time it bears a high load. In fact, this bolt according to the invention to a large extent utilises the capacity of the steel material in both its deformation capacity and strength. The rock anchoring effect of the bolt is assured within segments between the anchors. A loss of anchoring at an individual anchor only locally affects the reinforcement effect of the bolt. In the whole the bolt would still work well with a loss of one or more individual anchors, as long as one or more anchors are fixed in the borehole. Assume that, for instance, the thread portion of the bolt according to the invention fails and the anchoring at the surface is lost. With the two-point anchor bolts according to background art such a loss of surface anchoring incurs a total failure of the bolt, whereas the result of a surface anchor failure with the bolt of the invention is a loss of reinforcement only in the bolt segment between the thread and the first anchor being closest to the surface. The remainder of the bolt is not affected by the surface segment failure of the thread because it is still well anchored in the rock by the remaining unaffected anchors.

The thread should be at least as strong as the steel rod or even stronger. Therefore, the nominal diameter of the thread should be larger than the diameter of the rod so as for the effective diameter of the thread to be equal to or larger than the diameter of the rod. Another embodiment of the invention is to conduct special metallurgical treatment to the thread portion so that its strength is made higher than the rod. The deformation capacity of the thread is not particularly relevant. The main issue about the thread is that the thread is made so strong that the steel rod between the thread and the first anchor has a chance to get into yielding. If done so, the ultimate deformation prior to failure of the rod would be significantly large.

An example of a rock bolt according to the invention is presented below and illustrated in Fig. 3 It is assumed that the parameters of the bolt are given as follows.

| | | |
|---|---|---|
| Rod diameter, d: | 20 | mm |
| Anchor spacing, Lₛ: | 0.55 | m |
| Anchor length, Lₐ:: | 0.05 | m |
| Thread length, Lₜ: | 0.10 | m |
| Number of anchors, n: | 5 | |
| Bolt length, L: | 5 × 0.55 = 2.75 m. | |
| Bolt fracture strength: | 200 | kN |
| Bolt yielding strength: | 150 | kN |
| Yielding strain at failure: | 20% | |

The bolt of the example has 5 bolt segments with every segment being (Lₛ - Lₐ) = 0.5 m long. Taking into account the yielding elongation, every segment can extend up to (0.5 m x 20%) = 10 cm. Thus each rod segment (0.5 m long) can bear a maximum elongation of 10 cm. At the same time it bears a load between 150 and 200 KN. The first segment of the rod (from the thread to the first anchor) may be a bit shorter than the others. In the example embodiment it is about 0.4 m (Lₛ - Lₐ - Lₜ)). The ultimate elongation of this segment is (0.4 m x 20%) = 8 cm. For rebar bolts, it is only the deformation capacity of the part of the thread is motivated (Li, 2006a). The ultimate elongation from the tensioned part of the thread is estimated maximum 1 cm. With a stronger thread, the ultimate elongation of the D-bolt at the wall surface (8 cm) would be significantly improved compared to the conventionally threaded rebar bolts. With such a deformation/load capacity, the bolt can provide a satisfying effect of rock reinforcement in largely deformed or rockburst-prone rock masses.

The bolt according to the invention has more than three anchors of length between 0.03 m and 0,02 m, each pair of anchors separated by segments which may vary correspondingly in length between about 0.3 m and 2 m in length, depending on the rock conditions and the thickness of the stem. The ratio of the length of the stem portions to the length of the anchors may vary between 5 to 1 and 40 to 1. The diameter of the rock bolt stem may be between 10 mm and 40 mm or more.

The rock bolt according to the invention is characteristic of a high capacity in both deformation- and load-bearing. Furthermore, the quality of bolt installation is reliable because of its multi-point anchoring mechanism. The bolt is particularly suit to civil and mining engineering which faces the problem of large rock deformation or rock burst. The bolt can provide a good reinforcement not only in the case of continuous rock deformation (in soft and weak rock masses), but also in the case of local opening of individual rock joints (in blocky rock masses). The opening displacement of a single rock joint will be constrained by the two anchors overriding the joint.

The anchors may be formed in several ways to provide some different forms: Figure 5a, b, c, d, and e illustrate embodiments of the anchors according to the invention. Fig. 5a illustrates an embodiment of the anchor in which a short portion of the stem has been flattened to provide a widened, integrated anchor having two lobes in the cross-section and tapering off toward either transition to the stem portions. The flattening may take place under slight longitudinal simultaneous upsetting so as for providing a yield strength of said anchors higher than the yield strength of the adjacent stem portions. Fig. 5b illustrates an embodiment of the anchor in which a short portion of the stem has been shortened by longitudinal upsetting. Fig. 5c is an illustration of a three-lobed anchor that shows a certain tapering-off in the transition zone toward either end. Fig. 5d illustrates a rock bolt according to the invention having anchors with an eye-shaped aperture. The material cross-section area of the anchor over the aperture, perpendicular to the axis of the rock bolt, is at least as large as for the stem. Fig. 5e illustrates an embodiment of an anchor shaped with two ends separated by a neck having at least the thickness of the rod stem. The upsetting is similar to the upsetting of Fig. 5b. In this embodiment the anchor may further be formed having three lobes.

The invention provides a rock bolt with multiple straight stem portions each followed by a short anchor. This provides short, relatively rigid anchors and a high proportion of stem lengths with a high deformation capacity. Thus the rock bolt will be attached firmly to a multiplicity of spaced borehole wall locations along the rod and constrain rock deformation. The pre-tensioning feature may prevent or delay initial crack formation and may also provide an earlier constraining of the rock mantle. The rock bolt according to the invention will be useful for constraining rock deformation both due to long-term deformation and rock burst

### References

Björnfot F. and Stephansson O. 1984. Mechanics of grouted rock bolts - field testing in hard rock mining. Report BeFo 53:1/84, Swedish Rock Engineering Research Foundation.
Li, C.C. 2006a. A practical problem with threaded rebar bolts in reinforcing largely deformed rock masses. Rock Mech Rock Engng. ISSN 0723-2632. (in press) Available online
Li, C.C. 2006b. Rock support design based on the concept of pressure arch. Int. J. Rock Mech. Min. Sci. 43(7), 1083-1090..
Li, C.C. and Marklund, P.-I. 2004. Field tests of the cone bolt in the Boliden mines. Bergmekanikkdagen 2004, Oslo, 35.1-12. ISBN 82 91341 85 0.
Li, C. and Stillborg, B. 1999. Analytical models for rock bolts. Int. J. Rock Mech. Min. Sci. 36(8), 1013-1029. ISSN 1365-1609.
Stillborg B., Professional Users Handbook for Rock Bolting. Trans Tech Publications (2nd edition) (1994).
Sun, X. 1984. Grouted rock bolt used in underground engineering in soft surrounding rock or in highly stressed regions. Proc. of Int. Symp. on Rock Bolting (edited by O Stephansson), A.A. Balkema, Rotterdam. 93-99

## Claims

1. A rock bolt for being grouted in a borehole in a rock,
said rock bolt **characterised by**
- an elongate cylindrical massive stem (1) with a threaded portion (3a) at the borehole surface portion of said stem (1), said threaded portion (3a) provided with one or more nuts (3b) and one or more washers, sheaves or face plates (3c) arranged for pre-tensioning the rock bolt in the borehole;
- said stem (1) comprising three or more extensive lengths of stem portions (1s) , each stem portion followed by an integrated anchor (2a, 2b, 2c, ...), said anchors (2a, 2b, 2c, ... ) being of short extent compared to the extent of said stem portions (1s), said anchors (2a, 2b, 2c, ... ) distributed with separations (Lₐ) along the length of said stem (1);
- said anchors (2a, 2b, 2c, ...) for being locally anchored relative to their corresponding local borehole wall portions for taking up load arising due to rock deformation,
- said stem portions (1 s) arranged for slipping relative to the grout or the borehole, so as for each of said stems (1s) to constrain local rock deformation through elongation of said stem portions between pairs of a locally anchored preceding anchor (2a, 2b, ...) and a locally anchored consecutive anchor (2b, 2c, ...)..

2. The rock bolt of claim 1, the ratio of a length of said stem portions (1s) to a length of said anchors being betweeen 5 to 1 and 40 to 1.

3. The rock bolt of claim 1, said anchor spacing, being about 0.55 m, said anchor length being about 0.05 m.

4. The rock bolt of claim 1, in which said separations (Lₐ) of said anchors (2) are of the same lengths.

5. The rock bolt of claim 1, said stem (1) with integrated anchors (2) made in steel.

6. The rock bolt of claim 1, said stem portions (1s) arranged for having a higher deformation capacity per unit length as compared to said anchors (2).

7. The rock bolt of claim 1, said integrated anchors (2) being hardened.

8. The rock bolt of claim 1, wherein a first yield strength of said anchors (2) is higher than a second yield strength of said stem portions (1s).

9. The rock bolt of claim 1, said stem portions (1s) having a smooth surface for slipping relative to the grout or the local borehole wall perimeter.

10. The rock bolt of claim 9, said bolt being mechanically polished or electropolished.

11. The rock bolt of claim 1, said stem portions (1s) provided with a slip layer (6).

12. The rock bolt of claim 11, said slip layer (6) being wax or paint.

13. The rock bolt of claim 1, said stem (1s) being surface treated so as for not binding to said hardened grout.

14. The rock bolt of claim 13, said stem (1) said surface treatment being chemical, such as by being added a metal oxide layer on said stem (1).

15. The rock bolt of claim 1, said anchors (2) being tapered off so as for to dissipating energy by displacing and deforming the adjacent grout when heavily loaded.

16. The rock bolt of claim 1, said threads (3a) having an effective diameter equal to or larger than an effective diameter of said stem (1).

17. The rock bolt of claim 1, the threaded portion (3a) being hardened.

18. The rock bolt of claim 1, a bottomhole end portion of said stem (1) provided with an end mixer (4).

19. The rock bolt of claim 18, said end mixer (4) constituted by an anchor (2).

20. The rock bolt of claim 1, the ratio of a length of said stem portions (1s) to a length of said anchors being betweeen 10 to 1.

## Patentansprüche

1. Ein Felsanker zur Zementierung in ein Bohrloch in einem Felsen, wobei der Felsanker durch folgendes **gekennzeichnet** ist:
- ein verlängerter zylindrischer solider Stab (1) mit einem Gewindeteil (3a) an dem Bohrloch-Oberflächenteil des Stabes (1), wobei der Gewindeteil (3a) mit einer oder mehr als einer Gewindemutter (3b) und einer oder mehr als einer Distanzscheibe, Gegenscheibe oder Ankerplatte (3c) versehen ist, die zum Vorspannen des Felsankers in dem Bohrloch angeordnet sind;
- der Stab (1) umfasst drei oder mehrere weitläufige Längen von Stababschnitten (1s), auf jeden Stababschnitt folgt ein integrierter Anker (2a, 2b, 2c, ...), die Anker (2a, 2b, 2c, ...) besitzen ein geringes Ausmaß im Vergleich zu dem Ausmaß der Stababschnitte (1s) und die Anker (2a, 2b, 2c, ...) sind mit Abständen (Lₐ) entlang der Länge des Stabes (1) verteilt;
- die Anker (2a, 2b, 2c, ...) sind zur örtlichen Verankerung relativ zu ihren entsprechenden örtlichen Bohrloch-Wandteilen, um die aufgrund von Felsdeformation entstehende Last aufzunehmen;
- die Stababschnitte (1s) sind zum Gleiten relativ zu der Zementierung oder dem Bohrloch angeordnet, so dass jeder der Stababschnitte (1s) eine örtliche Felsdeformation durch Verlängerung der Stababschnitte zwischen Paaren eines örtlich verankerten vorangehenden Ankers (2a, 2b, ...) und eines örtlich verankerten nachgehenden Ankers (2b, 2c, ...) einschränkt.

2. Der Felsanker nach Anspruch 1, wobei das Verhältnis einer Länge der Stababschnitte (1s) zu einer Länge der Anker zwischen 5 bis 1 und 40 bis 1 beträgt.

3. Der Felsanker nach Anspruch 1, wobei der Ankerabstand etwa 0,55 m beträgt und die Ankerlänge etwa 0,05 m beträgt.

4. Der Felsanker nach Anspruch 1, wobei die Abstände (Lₐ) der Anker (2) die gleiche Länge besitzen.

5. Der Felsanker nach Anspruch 1, wobei der Stab (1) mit den integrierten Ankern (2) aus Stahl hergestellt ist.

6. Der Felsanker nach Anspruch 1, wobei die Stababschnitte (1s) derart angeordnet sind, dass sie eine höhere Deformationskapazität pro Einheitslänge im Vergleich zu den Ankern (2) aufweisen.

7. Der Felsanker nach Anspruch 1, wobei die integrierten Anker (2) gehärtet sind.

8. Der Felsanker nach Anspruch 1, wobei eine erste Streckgrenze der Anker (2) höher ist als eine zweite Streckgrenze der Stababschnitte (1s).

9. Der Felsanker nach Anspruch 1, wobei die Stababschnitte (1 s) eine glatte Oberfläche zum Gleiten relativ zu der Zementierung oder dem örtlichen Bohrloch-Wandumfang aufweisen.

10. Der Felsanker nach Anspruch 9, wobei der Felsanker mechanisch poliert oder elektropoliert ist.

11. Der Felsanker nach Anspruch 1, wobei die Stababschnitte (1s) mit einer Gleitschicht (6) versehen sind.

12. Der Felsanker nach Anspruch 11, wobei die Gleitschicht (6) ein Wachs oder ein Anstrich ist.

13. Der Felsanker nach Anspruch 1, wobei der Stab (1s) oberflächenbehandelt ist, damit er nicht an den ausgehärteten Mörtel bindet.

14. Der Felsanker nach Anspruch 13, wobei der Stab (1) eine chemische Oberflächenbehandlung durch Aufbringen einer Metalloxidschicht auf den Stab (1) aufweist.

15. Der Felsanker nach Anspruch 1, wobei die Anker (2) konisch sind, so dass sie Energie durch Verdrängung und Verformung des benachbarten Mörtels bei schweren Lasten umwandeln.

16. Der Felsanker nach Anspruch 1, wobei die Gewinde (3a) einen wirksamen Durchmesser aufweisen, der gleich oder größer als ein wirksamer Durchmesser des Stabes (1) ist.

17. Der Felsanker nach Anspruch 1, wobei der Gewindeteil (3a) gehärtet ist.

18. Der Felsanker nach Anspruch 1, wobei ein Bodenloch-Endteil des Stabes (1) mit einem Endverbinder (4) versehen ist.

19. Der Felsanker nach Anspruch 18, wobei der Endverbinder (4) von einem Anker (2) gebildet wird.

20. Der Felsanker nach Anspruch 1, wobei das Verhältnis einer Länge der Stababschnitte (1 s) zu einer Länge der Anker zwischen 10 bis 1 beträgt.

## Revendications

1. Boulon d'ancrage destiné à être scellé dans un trou de forage dans une roche, ledit boulon d'ancrage étant **caractérisé par** :
- une tige massive cylindrique allongée (1) avec une partie filetée (3a) au niveau de la partie de surface de trou de forage de ladite tige (1), ladite partie filetée (3a) comportant un ou plusieurs écrous (3b) et une ou plusieurs rondelles, poulies ou plaques à trou (3c), agencés pour mettre en pré-tension le boulon d'ancrage dans le trou de forage ;
- ladite tige (1) comprenant au moins trois longueurs extensives de parties de tige (1 s), chaque partie de tige étant suivie d'une ancre intégrée (2a, 2b, 2c, ...), lesdites ancres (2a, 2b, 2c, ...) étant de faible étendue par comparaison à l'étendue desdites parties de tige (1 s), lesdites ancres (2a, 2b, 2c, ...) étant distribuées avec des séparations (La) le long de la longueur de ladite tige (1) ;
- lesdites ancres (2a, 2b, 2c, ...) étant destinées à être ancrées localement par rapport à leurs parties de paroi du trou de forage locales correspondantes pour absorber une charge apparaissant en raison de la déformation de la roche,
- lesdites parties de tige (1s) étant agencées pour glisser par rapport au scellement ou au trou de forage de telle sorte que chacune desdites tiges (1s) contraint une déformation de roche locale par élongation desdites parties de tige entre des paires d'une ancre ancrée localement précédente (2a, 2b, ...) et d'une ancre ancrée localement consécutive (2b, 2c, ...).

2. Boulon d'ancrage selon la revendication 1, le rapport d'une longueur desdites parties de tige (1s) sur une longueur desdites ancres étant entre 5 à 1 et 40 à 1.

3. Boulon d'ancrage selon la revendication 1, ledit espacement d'ancre étant d'environ 0,55 m, ladite longueur d'ancre étant d'environ 0,05 m.

4. Boulon d'ancrage selon la revendication 1, dans lequel lesdites séparations (Lₐ) desdites ancres (2) sont de même longueur.

5. Boulon d'ancrage selon la revendication 1, ladite tige (1) ayant des ancres intégrées (2) en acier.

6. Boulon d'ancrage selon la revendication 1, lesdites parties de tige (1s) étant agencées pour avoir une capacité de déformation par unité de longueur supérieure par comparaison auxdites ancres (2).

7. Boulon d'ancrage selon la revendication 1, lesdites ancres intégrées (2) étant durcies.

8. Boulon d'ancrage selon la revendication 1, dans lequel une première limite d'élasticité desdites ancres (2) est supérieure à une seconde limite d'élasticité desdites parties de tige (1 s).

9. Boulon d'ancrage selon la revendication 1, lesdites parties de tige (1 s) ayant une surface lisse pour glisser par rapport au scellement ou au périmètre de paroi de trou de forage locale.

10. Boulon d'ancrage selon la revendication 9, ledit boulon étant poli mécaniquement ou poli électriquement.

11. Boulon d'ancrage selon la revendication 1, lesdites parties de tige (1 s) comportant une couche de glissement (6).

12. Boulon d'ancrage selon la revendication 11, ladite couche de glissement (6) étant de la cire ou de la peinture.

13. Boulon d'ancrage selon la revendication 1, ladite tige (1s) étant traitée en surface de façon à ne pas se lier audit scellement durci.

14. Boulon d'ancrage selon la revendication 13, ladite tige (1) ayant un traitement de surface chimique, tel que par ajout d'une couche d'oxyde métallique sur ladite tige (1).

15. Boulon d'ancrage selon la revendication 1, lesdites ancres (2) étant effilées de façon à dissiper de l'énergie par déplacement et déformation du scellement adjacent lorsqu'elles sont chargées de manière importante.

16. Boulon d'ancrage selon la revendication 1, lesdits filets (3a) ayant un diamètre effectif égal ou supérieur à un diamètre effectif de ladite tige (1).

17. Boulon d'ancrage selon la revendication 1, la partie fileté (3a) étant durcie.

18. Boulon d'ancrage selon la revendication 1, une partie d'extrémité de fond de trou de ladite tige (1) comportant un mélangeur d'extrémité (4).

19. Boulon d'ancrage selon la revendication 18, ledit mélangeur d'extrémité (4) étant constitué par une ancre (2).

20. Boulon d'ancrage selon la revendication 1, le rapport d'une longueur desdites parties de tige (1s) sur la longueur desdites ancres étant entre 10 et 1.
